Europäisches Patentamt

European Patent Office

Office européen des brevets

(11) Veröffentlichungsnummer: **0 338 460**
**A2**

## (12) EUROPÄISCHE PATENTANMELDUNG

(21) Anmeldenummer: 89106756.3

(51) Int. Cl.⁴: **B23Q 3/10**

(22) Anmeldetag: 14.04.89

(30) Priorität: 19.04.88 DE 3812942

(43) Veröffentlichungstag der Anmeldung:
25.10.89 Patentblatt 89/43

(84) Benannte Vertragsstaaten:
AT CH DE FR GB IT LI

(71) Anmelder: Heckler & Koch GmbH
Pfäfflinstrasse Postfach 1329
D-7238 Oberndorf(DE)

(72) Erfinder: Erb, Rolf
Lembergstrasse 3
D-7211 Villingendorf(DE)
Erfinder: Mayer, Xaver, Dipl.-Ing.
Baumgartenweg 12
D-7451 Grosselfingen(DE)

(74) Vertreter: Patentanwälte Kohler - Schwindling
- Späth
Hohentwielstrasse 41
D-7000 Stuttgart 1(DE)

(54) **Bausatz für Werkstückhalterungen.**

(57) Ein mit Gewinde versehenes Verbindungselement (20) zum Verbinden von Elementen (1) eines Bausatzes für Werkstückhalterungen vorzugsweise für Meßzwecke hat eine zylindrische oder prismatische Außenfläche und ist an der Außenfläche elastisch federnd ausgebildet, so daß es in eine zylindrische Aussparung (12) eines Bauelements unter elastischer Verformung seiner federnden Bereiche einsetzbar ist und in der Aussparung in einer Ebene rechtwinklig zu seiner Achse unter Verformung der federnden Bereiche verlagerbar ist. Dadurch können Toleranzen ausgeglichen werden.

Fig.1

## Bausatz für Werkstückhalterungen

Die Erfindung betrifft einen Bausatz für Werkstückhalterungen vorzugsweise für Meßzwecke nach dem Oberbegriff des Patentanspruches 1.

Für Werkstückhalterungen sind Bausätze bekannt, die aus einer planparallelen Grundplatte und verschiedenen anderen Bauelementen bestehen. Die Grundplatte weist bei einem bekannten derartigen Bausatz in einem Raster angeordnet eine Mehrzahl von durchgehenden Bohrungen auf, die teilweise als glatte Bohrungen und teilweise als Gewindebohrungen ausgebildet sind. Die Gewindebohrungen dienen zum maßgenauen Befestigen der weiteren, oben erwähnten Bauelemente. Damit das Befestigen der Bauelemente auf der Grundplatte nicht durch unzulässig große Toleranzen in der Lage der Gewindebohrungen behindert wird, wird die Lage der Gewindebohrungen bei dem bekannten Bausatz dadurch hochgenau festgelegt, daß die Gewindebohrungen in Metallhülsen vorgesehen sind, die auf Schraubenbolzen einer Matrize aufgeschraubt werden. Die auf diese Weise hochgenau im gegenseitigen Abstand gehaltenen Hülsen werden nun in übergroße Bohrungen der Grundplatte eingesetzt und dort vergossen. Dadurch ist die Herstellung der bekannten Grundplatte und somit des ganzen Bausatzes aufwendig.

Der Erfindung liegt die Aufgabe zugrunde, eine Möglichkeit zu schaffen, die Grundplatte und auf dieser zu befestigende weitere Bauteile mit größeren Toleranzen herstellen zu können.

Diese Aufgabe wird dadurch gelöst, daß der Bausatz mindestens ein Verbindungselement mit einer zylindrischen oder prismati schen Außenfläche aufweist, das an mindestens einigen Punkten der Außenfläche elastisch federnd ausgebildet ist, derart, daß es in eine zylindrische Aussparung des Bauelements unter elastischer Verformung seiner federnden Bereiche einsetzbar ist und in der Aussparung in einer Ebene rechtwinklig zu seiner Achse unter Verformung der federnden Bereiche verlagerbar ist, und daß das Verbindungselement ein Gewinde aufweist.

Dieses erfindungsgemäße Verbindungselement kann seine Lage in der Aussparung, die es aufnimmt, in radialer Richtung relativ zur Achse der zylindrischen Aussparung geringfügig ändern, wobei sich die elastisch federnd ausgebildeten Bereiche entsprechend verformen, und durch diese Lageänderung ist es möglich, Toleranzen auszugleichen, so daß die Aussparungen, die das Verbindungselement aufnehmen, nicht mit äußerster Präzision positioniert sein müssen. Bei dem später beschriebenen Ausführungsbeispiel wäre eine Toleranz in der Lage der Aussparungen, die dort kreiszylindrisch sind, von +/- 0,05 mm oder sogar noch größer ohne weiteres möglich.

Derzeit wird bevorzugt, daß das Verbindungselement und die Aussparung einen kreiszylindrischen Querschnitt haben. Dadurch ist die Herstellung einfach. Das Verbindungselement kann in der Aussparung durch Reibungskräfte festgehalten sein, die bei Bedarf auch Drehkräfte aufnehmen können. Es sind jedoch auch andere, nicht-kreisförmige Querschnitte, z.B. ein sechseckiger Querschnitt, möglich, die von sich aus eine Drehsicherung bewirken. Auch eine Befestigung des Verbindungselements durch einen Bajonettverschluß oder ähnliches wird für die Erfindung in Betracht gezogen.

Die elastisch verformbaren Bereiche, die zweckmäßigerweise einen ausreichend hohen Reibungskoeffizienten aufweisen, um das Verbindungselement in der Aussparung ausreichend festzuhal ten, bewirken auch eine Zentrierung der Achse des Gewindes des Verbindungselements innerhalb der zylindrischen Aussparung. Hierfür müssen die elastischen Bereiche ausreichend gleichmäßig am Verbindungselement verteilt angeordnet sein; es würde hier beispielsweise genügen, jeweils im Abstand von 120° einen elastisch federnden Bereich anzuordnen. Vorzugsweise erstreckt sich jedoch elastische Bereich auf den gesamten Umfang des Verbindungselements. Da das Verbindungselement mit seinen elastischen Bereichen an einer Zylinderfläche anliegt, nicht jedoch an einer Kegelfläche, durch die ebenfalls eine Zentrierung möglich wäre, ist die mit den elastischen Bereichen zusammenwirkende Fläche gegenüber versehentlichen Beschädigungen gut geschützt.

Bei einer Ausführungsform der Erfindung sind die elastischen Bereiche durch einen O-Ring gebildet. Der Vorteil liegt darin, daß handelsübliche O-Ringe, die für Dichtungszwecke vorgesehen sind, verwendet werden können.

Bei einer anderen Ausführungsform der Erfindung sind die elastischen Bereiche durch ein mit dem Befestigungselement verbundenes Kunststoffteil gebildet. Dieses kann eine beliebige geeignete Form haben; bei einer Ausführungsform der Erfindung umgibt das Kunststoffteil das Befestigungselement topfartig.

Das Verbindungselement kann gemäß Ausführungsformen der Erfindung als Mutter oder Hülse ausgebildet sein, an deren Außenfläche die elastischen Bereiche vorgesehen sind. Da die Mutter in der sie aufnehmenden Aussparung durch Reibung ausreichend festgehalten ist, um eine Schraube in sie einzudrehen, benötigt die Mutter keine zum Angreifen eines Schlüssels oder anderen Werkzeugs geeignete Fläche. Dennoch kann eine Schlüsselfläche zum Lösen von festsitzenden Schrauben nützlich sein. Die Mutter muß an ihrer Stützfläche, die die Spannkraft der Schraubenverbindung aufnimmt, nicht unbedingt geriffelt oder in sonstiger Weise reibungserhöhend ausgebildet sein.

Die genannte Hülse hat ein Innengewinde. Die mit Innengewinde versehene Hülse kann auch als Mutter angesehen werden, hat jedoch im Gegensatz zur oben genannten Mutter eine so große Länge, daß sie aus der genannten Aussparung herausragt und dadurch als Steckverbindungselement zwischen benachbarten Bauelementen dienen kann. Der Vorteil einer derartigen Hülse mit Innengewinde besteht darin, daß diese Hülse durch eine in das Innengewinde eingreifende Schraube verankert werden kann, und daß in das Innengewinde von der anderen Seite her eine weitere Schraube eingreifen kann, um mit dem erstgenannten Bauelement ein weiteres Bauelement zu verbinden. Der Bausatz kann eine Hülse mit der angegebenen Länge enthalten, die eine glatte Bohrung hat.

Bei einer anderen Ausführungsform der Erfindung ist das Verbindungselement ein Schraubenbolzen, in dessen mittlerem Längenbereich eine Verdickung vorgesehen ist, die die elastischen Bereiche aufweist. Die elastischen Bereiche bewirken dabei eine Zentrierung des Schraubenbolzens relativ zu der genannten Aussparung. Diese Zentrierung ist deswegen möglich, weil die zueinander passenden Gewinde so gewählt sind, daß durch das Gewinde selbst eine exakte Ausrichtung der Längsachse des Gewindeteils des Schraubenbolzens auf die Längsachse der Gewindebohrung nicht erfolgt; daher kann ein derartiger Schraubenbolzen mit einem Innengewinde zusammenwirken, das an einem Bauelement fest (also nicht elastisch in seiner Lage änderbar wie das Gewinde der oben beschriebenen Mutter) angeordnet ist, so daß auch für die Lage dieser starr an einem Bauelement angeordneten Gewindebohrungen keine allzu kleinen Toleranzen erforderlich sind.

Bei der oben genannten Hülse bzw. der Verdickung des Schraubenbolzens sind vorzugsweise die elastischen Bereiche mindestens zweimal in axialem Abstand voneinander vorgesehen. Dadurch wirken diese Bereiche mit den Aussparungen von zwei durch das jeweilige Verbindungselement miteinander verbundenen Bauteilen zusammen.

Die Erfindung betrifft auch ein Bauelement für einen erfindungsgemäßen Bausatz für Werkstückhalterungen vorzugsweise für Meßzwecke, das als planparalleles Element ausgebildet ist, das zwei parallele ebene Flächen und mindestens eine dazu rechtwinklig verlaufende Fläche aufweist, mit in mindestens einer der parallelen Flächen in einem vorgegebenen Raster angeordneten durchgehenden Bohrungen. Als derartiges Bauelement kann die oben beschriebene bekannte Grundplatte aufgefaßt werden. Gemäß der Erfindung ist vorgesehen, daß die Bohrungen von den beiden parallelen Flächen durch je eine im wesentlichen zylindrische konzentrische Einsenkung abgesetzt sind. Diese Einsenkung ist die oben genannte Aussparung, an deren Zylinderfläche sich die elastischen Bereiche des Verbindungselements abstützen können. Die vorzugsweise parallel zur ebenen Außenfläche des Bauelements verlaufende Bodenfläche der Einsenkung bildet eine Abstützschulter, die die durch die Schraubverbindung erzeugten Spannkräfte aufnimmt. Die Tiefe der Einsenkung und die Höhe der Schraubenköpfe der Verbindungschrauben und die Dicke der Muttern sind so gewählt, daß die Köpfe bzw. Muttern im montierten Zustand nicht aus der Einsenkung herausragen. Dadurch wird eine vielfältige Montagemöglichkeit begünstigt.

Bei der eingangs genannten bekannten Grundplatte sind bereits glatte Bohrungen und Gewindebohrungen vorgesehen. Gemäß einer Ausführungsform der Erfindung ist bei einem Bauelement für einen erfindungsgemäßen Bausatz für Werkstückhalterungen vorzugsweise für Meßzwecke, das als planparalleles Element ausge bildet ist, das zwei parallele ebene Flächen und mindestens eine dazu rechtwinklig verlaufende Fläche aufweist, mit in mindestens einer der parallelen Flächen in einem vorgegebenen Raster angeordneten durchgehenden Bohrungen und Gewindebohrungen vorgesehen, daß die Bohrungen von den beiden parallelen Flächen durch je eine im wesentlichen zylindrische konzentrische Einsenkung abgesetzt sind, und daß die Gewindebohrung in einem Metallteil vorgesehen ist, das unter Zwischenschaltung eines in Radialrichtung elastisch verformbaren Teils in eine Einsenkung in einer der parallelen Flächen eingesetzt ist. Diese zuletzt beschriebene Ausführungsform eines Bauelements unterscheidet sich somit von dem bekannten Bauelement, nämlich der bekannten Grundplatte, dadurch, daß die Gewindebohrungen des Bauelements ihre Lage relativ zueinander und zu dem Bauelement selbst im Rahmen der Elastizität der elastischen Bereiche ändern können. Dadurch werden die oben beschriebenen Vorteile erzielt.

Die Metallteile, die unter Zwischenschaltung mindestens eines elastischen Teils in das Bauelement eingesetzt sind, können bei Ausführungsformen der Erfindung leicht lösbar, wie beim später beschriebenen Ausführungsbeispiel, mit dem Bauelement verbunden sein. Hierdurch ergibt sich der Vorteil, daß vom Benutzer von Fall zu Fall Gewindebohrungen, die sich an unerwünschten Stellen befinden, durch einfaches Herausdrücken des Metallteils, gegebenenfalls zusammen mit dem elastisch verformbaren Teil beseitigt werden können, so daß durch die dadurch frei werdende Bohrung beispielweise eine Schraube gesteckt werden kann. Auch ergibt sich der Vorteil, daß Gewindebohrungen nachträglich leicht an Stellen vorgesehen werden können, an denen sie bei der Auslieferung des mit den Innengewinden versehenen Bauelements vom Herstellerbetrieb noch nicht vorgesehen worden waren. Wie bereits erwähnt, wird derzeit eine lösbare Befestigung der Verbindungselemente nur durch Reibungskräfte bevorzugt. Es ist stattdessen bei Ausführungsformen der Erfindung auch möglich, eine elastisch federnde formschlüssige Verbindung vorzusehen, z.B. dadurch, daß ein am Verbindungselement angeordneter O-Ring in eine Ringnut in der Einsenkung des Bauelements eingreift.

Es ist stattdessen auch möglich, die elastisch gelagerten Gewindebohrungen so im Bauelement anzuordnen, daß sie nicht oder nicht leicht aus dem Bauelement entfernt werden können. Dann verbleibt noch der Vorteil, daß für die Lage der Einsenkungen eine größere Toleranz zulässig ist als beim Stand der Technik.

Die elastischen Bereiche können, wie bei den Ausführungsbeispielen vorgesehen, mit den Verbindungselementen fest verbunden sein. Bei anderen Ausführungsformen können sie mit dem Bauelement fest verbunden sein; z.B. kann in eine Nut in der zylindrischen Fläche der Einsenkung ein O-Ring eingesetzt sein oder eine elastische Hülse ist in die Einsenkung eingepreßt oder eingeklebt. Schließlich ist es bei der Erfindung auch möglich, die elastischen Teile durch separate Teile, z.B. durch Kunststoffhülsen, zu realisieren, die weder mit dem Bauelement noch dem Verbindungselement unlösbar verbunden sind.

Bei der Erfindung ist weiter von Vorteil, daß wegen der im Vergleich zum Stand der Technik großen Toleranz in der Lage der Bohrungen bzw. Einsenkungen die Abmessungen der Bauelemente ohne Schwierigkeiten als Vielfache des Rastermaßes gewählt werden können, denn auch diese Abmessungen (Länge, Breite, Dicke bei quaderförmigen Bauelementen) können mit den oben genannten verhältnismäßig großen Toleranzen hergestellt werden.

Bei einer Ausführungsform der Erfindung ist vorgesehen, daß das Bauelement in einer rechtwinklig zu den beiden Parallelflächen verlaufenden Fläche mindestens eine Gewindebohrung aufweist, die von der genannten Fläche durch eine Einsenkung ab gesetzt ist, die die gleichen Abmessungen aufweist wie die Einsenkungen in den beiden parallelen Flächen, und daß der Außendurchmesser des Gewindeteils einer zu der Gewindebohrung passenden Schraube kleiner ist als der Durchmesser der Bohrungen in den beiden parallelen Flächen.

Diese starr am Bauelement angeordneten Gewindebohrungen sind somit an Flächen angeordnet, die rechtwinklig zu den beiden parallel zueinander angeordneten Flächen, die bei einem plattenförmigen Element parallel zu Plattenebene verlaufen, gerichtet sind: Es kann zweckmäßig sein, in sämtlichen der genannten Flächen solche starren Gewindebohrungen vorzusehen. Bei Verwendung des oben beschriebenen Schraubenbolzens, der sich in der Einsenkung zentriert, kann trotz einer relativ großen Toleranz in der Lage der Gewindebohrung ein hinreichend genauer Zusammenbau mehrerer Bauelemente erfolgen.

Die mit dem Bausatz oder den beschriebenen erfindungsgemäßen Konstruktionselementen herstellbaren Werkzeughalterungen sind zumindest beim Ausführungsbeispiel zwar so stabil, daß sie auch schwere Werkstücke sicher lagern, wie dies für eine hochgenaue Vermessung erforderlich ist, sie sind jedoch nicht so stabil, daß an diesen Werkstücken dann noch hohe Kräfte angreifen können, wie sie beispielsweise bei der spanenden Bearbeitung erforderlich sind. Es ist jedoch lediglich eine Frage der Dimensionierung, um auch höhere Kräfte aufnehmen zu können. Leichte Bohrarbeiten oder eine Bearbeitung mittels Laserstrahls kann auch bei einer Werkstückhalterung unter Verwendung der im Ausführungsbeispiel beschriebenen Elemente vorgenommen werden.

Die für Meßzwecke erforderliche hohe Genauigkeit wird dadurch erreicht, daß Meßfühler an der durch die erfindungsgemäßen Elemente hergestellten Werkstückhalterung unter Verwendung von Feineinstellungen, die nicht Gegenstand der Erfindung sind, in die gewünschte Position gebracht werden. Hierzu können beispielsweise Höheneinstellungen unter Verwendung von hochgenauen Schraubgewinden dienen.

Anschließend werden Ausführungsbeispiele der Erfindung anhand der Zeichnung beschrieben und erläutert. Die einzelnen Merkmale können je einzeln für sich oder zu mehreren in beliebiger Kombination bei einer Ausführungsform der Erfindung verwirklicht sein. Es zeigen:

Fig. 1 eine teilweise abgebrochene und teilweise aufgebrochene Draufsicht auf ein erstes Bauelement, das als Grundplatte geeignet ist, mit einer eingesetzten Mutter,

Fig. 2 einen Schnitt entsprechend der Linie II-II in Fig. 1,

Fig. 3 eine Draufsicht auf ein Bauelement mit quadratischem Querschnitt und mit Langloch,

Fig. 4 eine Seitenansicht entsprechend dem Pfeil IV in Fig. 3,

Fig. 5 eine Draufsicht auf ein anderes Bauelement mit quadratischem Querschnitt,

Fig. 6 eine Draufsicht auf ein im wesentlichen dreieckförmiges Bauelement,

Fig. 7 einen Längsschnitt durch eine Mutter,

Fig. 8 einen Längsschnitt durch eine Hülse mit glatter Bohrung,

Fig. 9 einen Längsschnitt durch eine Hülse mit Innengewinde und Schraubenzieherschlitzen,

Fig. 10 eine teilweise aufgebrochene Seitenansicht eines Schraubenbolzens,

Fig. 11 in vereinfachter Darstellung den Zusammenbau von zwei Bauelementen.

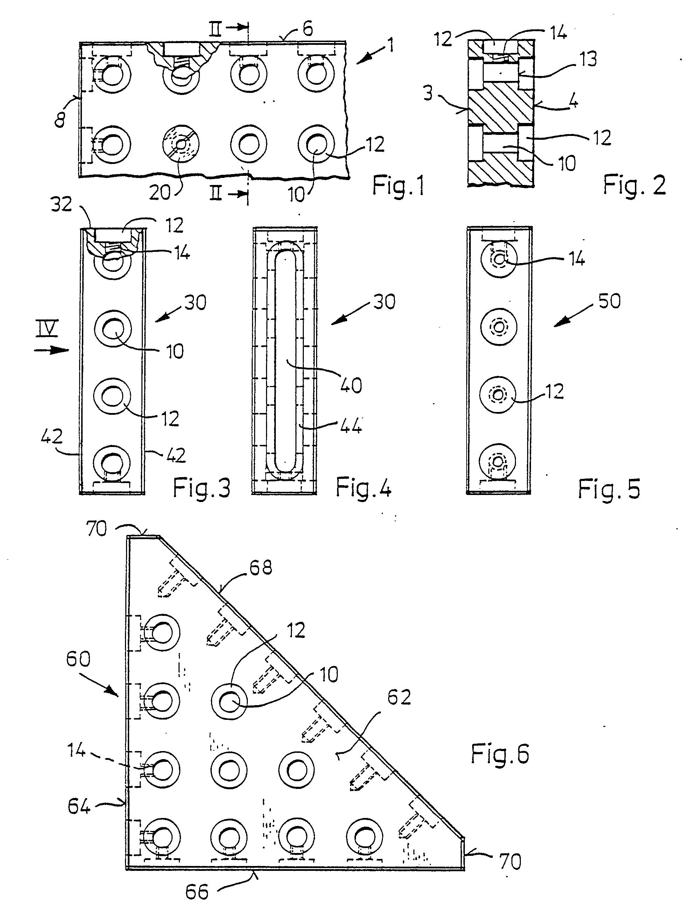

Die in Fig. 1 und 2 gezeigte ebene Grundplatte 1 ist durch parallel zur Plattenebene verlaufende ebene Flächen 3 und 4 und durch dazu rechtwinklig und zueinander ebenfalls rechtwinklig verlaufende ebenen Flächen 6 und 8 begrenzt; die zu den in Fig. 1 gezeigten Flächen 6 und 8 jeweils parallelen, die Grundplatte rechts und unten begrenzenden Flächen sind nicht dargestellt. Die Grundplatte 1 weist in einem parallel zu den Flächen 6 und 8 orientierten Raster glatte Bohrungen 10 auf, die gegenüber den Flächen 3 und 4 durch Einsenkungen 12 mit zu den Flächen 3 und 4 parallel verlaufender Bodenfläche 13 abgesetzt sind. Die Einsenkungen 12 sind im Querschnitt kreiszylindrisch. Im Beispiel ist das Rastermaß, daß ist der gegenseitige Abstand zweier Bohrungen 10 in waagrechter oder senkrechter Richtung in Fig. 1 (Achsabstand), 20 mm. Die in Fig. 2 sichtbare Dicke der Grundplatte 1 beträgt ebenfalls 20 mm. Der Abstand der den Flächen 6 und 8 benachbarten Bohrungen 10 (von deren Mitte aus gemessen) zu der Fläche 6 bzw. 8 entspricht dem halben Rastermaß und ist im Beispiel daher 10 mm.

In den rechtwinklig zu den die Plattenebene definierenden Flächen 3 und 4 verlaufenden Flächen 6 und 8 der Grundplatte 1 sind Gewindebohrungen 14 vorgesehen, die voneinander den oben genannten Rasterabstand haben. Die jeweils letzten Gewindebohrungen haben von den benachbarten Flächen 6 bzw. 8 auch hier einen Abstand von 10 mm. Auch diese Gewindebohrungen 14 sind gegenüber den Seitenflächen 6 bzw. 8 durch eine Einsenkung 12 abgesetzt, die die gleichen Abmessungen hat wie die Einsenkungen 12 in den Seitenflächen 3 und 4. Im Beispiel reichen die Gewindebohrungen 14 bis in die glatten Bohrungen 10 hinein. Die Gewindebohrungen können jedoch auch als Sackbohrungen ausgebildet sein, wie im Beispiel der Fig. 6 vorgesehen ist.

Im Beispiel hat die Grundplatte 1 eine Länge von 32 cm, eine Breite von 16 cm und, wie bereits erwähnt eine Dicke von 2 cm. Dementsprechend sind auf der Grundplatte 16 x 8 glatte Bohrungen 10 vorgesehen.

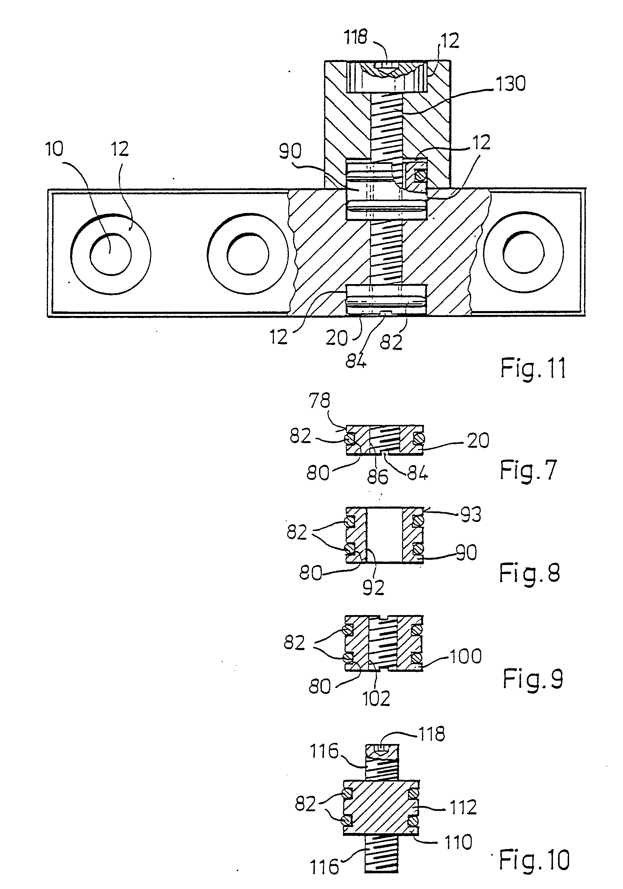

In Fig. 1 ist an einer Stelle eine Mutter 20 dargestellt, die in eine Einsenkung 12 eingedrückt ist und dort durch an der Gewindemutter 20 vorgesehene elastisch verformbare Bereiche durch Reibung gehalten ist. Die Gewindemutter 20 ist somit lösbar mit der Grundplatte 1 verbunden bzw. ein lösbarer Bestandteil der Grundplatte 1. Die Gewindemutter 20 wird anhand der Fig. 7 näher beschrieben.

Fig. 3 zeigt ein Bauelement 30, das in der Draufsicht der Fig. 3 lediglich vier in einer geraden Reihe hintereinander angeordnete Bohrungen 10 mit Einsenkungen 12 sowohl auf der dem Betrachter zugewandten Seite als auch auf der gegenüberliegenden Seite aufweist. Die in Fig. 3 sichtbare Breite entspricht der rechtwinklig zur Zeichenebene der Fig. 3 gemessenen Dicke und ist gleich der Dicke der Grundplatte 1. Das Bauelement 30 hat somit einen quadratischen Querschnitt. In den beiden quadratischen Endflächen 32 sind Gewindebohrungen 14 vorgesehen, die wiederum durch eine Einsenkung 12 gegenüber den Endflächen 32 abgesetzt sind. Nahezu über die gesamte Länge des Bauelements 30 erstreckt sich ein parallel zu Zeichenebene der Fig. 3 verlaufendes Langloch 40, das in Fig. 4 gezeigt ist. Zu den beiden Seitenflächen 42 hin erweitert sich das Langloch 40 durch eine Stufe 44; der Abstand dieser Stufe 44 von der Seitenfläche 42 ist gleich der Tiefe der Einsenkung 12. Das Langloch 40 und Stufe 44 dienen dazu, das Bauelement 30 mittels einer Schraube, deren Kopf sich an der Stufe 44 abstützt, längsverschiebbar oder in einer frei wählbaren Stellung, auch hinsichtlich seiner Winkelstellung, an einem anderen Bauelement zu befestigen.

Das in Fig. 5 gezeigte Bauelement 50 unterscheidet sich von dem Bauelement 30 dadurch, daß es anstatt des Langlochs vier im Rasterabstand angeordnete Gewindebohrungen 14 mit den zugehörigen Einsenkungen 12 aufweist. Auch an den quadratischen Endflächen 32 sind, wie beim Bauelement 30, Gewindebohrungen vorgesehen.

Das in Fig. 6 gezeigte Bauelement 60 hat annähernd die Gestalt eines rechtwinkligen, gleichschenkligen Dreiecks (mit zwei abgeschnittenen Ecken). Es weist an der dem Betrachter zugewandten Fläche 62 und der abgewandten Fläche glatte Bohrungen 10 mit den zugehörigen Einsenkungen 12 auf. An den drei längeren, rechtwinklig zu Zeichenebene der Fig. 6 verlaufenden Flächen -64, 66 und 68 sind im Rasterabstand Gewindebohrungen 14 mit Einsenkungen 12 vorgesehen. Bei der unter einem Winkel von 45° relativ zur Orientierung des Rasters verlaufenden Fläche 68 sind diese Gewindebohrungen symmetrisch zur rechtwinklig zur Zeichenebene der Fig. 6 verlaufenden Mittelebene dieser Fläche angeordnet. Lediglich aus Platzgründen sind an den beiden den abschnittenen Ecken des Dreiecks entsprechenden Flächen 70 keine Gewindebohrungen vorgesehen; bei Bedarf können auch hier Gewindebohrungen vorgesehen werden.

Je nach den Anforderungen wird ein Bauelementesatz noch andere als die bisher gezeigten Bauelemente enthalten. Insbesondere wird er vorteilhaft auch plattenförmige Elemente enthalten, vorzugsweise auch eine Anzahl von kleinen plattenförmigen Elementen haben, die zwei nebeneinander angeordnete Reihen von je vier glatten Bohrungen aufweisen und sich als Stützen für zahlreiche Zwecke eignen. Das dreieckige Bauelement 60 der Fig. 6 kann als seitliche Abstützung von vertikalen Elementen verwendet werden, oder auch dazu, schräg zur Grundplatte verlaufende Elemente an der Fläche 68 zu befestigen. Bei Bedarf können auch Bauelemente mit schrägen Flächen vorgesehen sein, die unter einem von 45° abweichenden Winkel zu einer der beiden anderen Seitenflächen verlaufen.

Fig. 7 zeigt vergrößert im Längsschnitt die Mutter 20. Die Dicke der Mutter 20 in Richtung der Gewindebohrung gemessen ist geringfügig kleiner als die Tiefe der Einsenkung 12, so daß eine in eine Einsenkung 11 eingedrückte Mutter 20 nicht über die Oberfläche des betreffenden Bauelements vorragt. Die Mutter 20 weist im wesentlichen die Gestalt einer kreisförmigen Scheibe auf, in deren zylindrischer Umfangsfläche eine Rechtecknut 80 vorgesehen ist, in die ein O-Ring 82 eingesetzt ist. Der O-Ring 82 ragt über die zylindrische Außenfläche 78 vor. Der Durchmesser der zylindrischen Fläche 78 ist kleiner als der Durchmesser der Einsenkungen 12. Beim Einsetzen der Mutter 20 in eine Einsenkung 12 hat daher wegen der zentrierenden Wirkung des O-Ringes 82 die zylindrische Außenfläche 78 der Mutter 20 einen allseitigen Abstand von der zylindrischen Wandung der Einsenkung 12. Wegen der elastischen Verformbarkeit des O-Rings 82 kann die Mutter 20 sich rechtwinklig zu Achse der Bohrung 10 in der Einsenkung 12 bewegen, sofern auf sie Kräfte einwirken, die den O-Ring 82 entsprechend elastisch verformen. Das Innengewinde 86 der Mutter ist gleich dem Gewinde der Gewindebohrungen 14.

Durch die zwischen dem O-Ring 82 und der zylindrischen Fläche der Einsenkung 12 herrschende Reibungskraft wird die Mutter 20 am Herausfallen aus der Einsenkung 12 gehindert, und beim Einschrauben eines Schraubenbolzens in die Gewindebohrung der Mutter nimmt diese Mutter die dabei auftretenden Drehkräfte durch die genannte Reibungskraft auf. Vorsorglich ist in der Mutter 20 ein Schraubenzieherschlitz 84 vorgesehen. Wirken auf die Mutter 20 durch eine Schraube ausgeübte Kräfte in Längsrichtung des Gewindes ein, so werden diese Kräfte durch die Bodenfläche 13 oder Schulter der Einsenkung 12 aufgenommen.

Fig. 8 zeigt eine Hülse 90, die eine glatte Bohrung 92 aufweist und deren Länge um eine Fertigungstoleranz kleiner ist als die doppelte Tiefe einer Einsenkung 12. Die Hülse 90 weist an ihrer zylindrischen Außenfläche 93 insgesamt zwei rechteckige Nuten 80 mit O-Ringen 82 auf, wobei der Abstand dieser O-Ringe von den beiden Enden der Hülse 90 so gewählt ist, daß beim Einsetzen der Hülse 90 in eine Einsenkung 12 der O-Ring etwa auf halber Höhe der Einsenkung 12 mit deren zylindrischer Außenwand in Berührung ist. Mit der Hülse 90 können zwei Bauelemente aneinander befestigt werden, wobei die O-Ringe 82 jeweils eine Zentrierung der Hülse in den zugeordneten Einsenkungen 12 bewirken. Die Hülse 90 bewirkt somit eine genaue Zuordnung der Einsenkungen 12 der beiden miteinander zu verbindenden Bauelemente. Damit die Verbindung unlösbar wird, können die beiden Bauelemente durch eine die Hülse 90 durchsetzende Schraube 130 und unter Verwendung einer Mutter 20 miteinander verbunden werden. Eine derartige Verbindung ist in Fig. 11 gezeigt.

Fig. 9 zeigt eine Gewindehülse 100, die sich von der Hülse 80 dadurch unterscheidet, daß sie anstelle einer glatten Bohrung 92 eine Gewindebohrung 102 hat. Die Gewindehülse 100 kann auch als Mutter angesehen werden, deren Höhe größer ist als die Höhe der Einsenkung 12, aber kleiner, vorzugsweise lediglich um die Fertigungstoleranz kleiner ist als die doppelte Höhe der Einsenkung 12.

Der in Fig. 10 gezeigte Schraubenbolzen 110 weist einen mittleren verdickten Bereich 112 auf, dessen Außenform genau der Hülse 90 entspricht. In Axialrichtung schließen sich an diesen mittleren Bereich 112 zu seinen beiden Seiten Gewindebolzenabschnitte 116 an, in denen zum einfachen Betätigen mittels eines Werkzeugs ein Innensechskant 118 vorgesehen ist. Der Schraubenbolzen 110 dient dazu, in einer Gewindebohrung 14 des einen Bauelements unmittelbar ein anderes Bauelement mit dessen Gewindebohrung 14 zu befestigen. Die O-Ringe der Verdickung 112 bewirken dabei eine Zentrierung des Schraubenbolzens 110 relativ zu den beiden Einsenkungen 12, die mit ihm in Eingriff sind, und somit eine genaue Zuordnung der Lage der beiden miteinander zu verbindenden Teile.

Die Innengewinde 14 der Bauelemente entsprechen genau dem Innengewinde 86 bzw. 92 der Mutter 20 und der Gewindehülse 100. Diese Innengewinde sind so bemessen, daß ein mit ihnen zusammenwirkender Gewindestab, beispielsweise die Gewindeabolzenabschnitte 116 oder die Gewindeabschnitte von Schrauben mit Spiel in die Bohrungen 10 und das Langloch 40 passen.

Im Beispiel unterscheiden sich die Durchmesser der Einsenkung 12 und der Mutter 20 um 0,1 mm. Demgemäß kann sich die Mutter 20 innerhalb einer Einsenkung 12 ausgehend von einer genau zentrischen Lage jeweils um 0,05 mm verschieben.

Im Beispiel sind Gewinde M6 verwendet. Als Schrauben sind handelsübliche Zylinderkopfschrauben mit einem Kopfdurchmesser von 10 mm (Kopfhöhe 4 mm) mit Innensechskant in Schaftlängen von 25 mm und 36 mm vorgesehen. Der O-Ring besteht aus synthetischem Kautschuk (Markenbezeichnung Perbunan) und hat einen Innendurchmesser von 8 mm und eine Wanddicke von 1,5 mm. Er ist jeweils in in der Mutter, in den Hülsen und in dem Schraubenbolzen vorgesehene Nuten mit einem Innendurchmesser von 8,1 mm eingesetzt. Der Außendurchmesser der Metallteile von Mutter und Hülsen und der Verdickung des Schraubenbolzens beträgt 11 mm. Der Durchmesser der Einsenkungen beträgt 11,1 mm, ihre Tiefe 4 mm. Die Länge der Mutter ist 4 mm, die der Hülsen 8 mm. Die Geamtlänge des Schraubenbolzens ist etwa 18 mm. Alle Teile mit Ausnahme der O-Ringe sind aus Metall, im Beispiel aus Stahl.

## Ansprüche

1. Bausatz für Werkstückhalterungen vorzugsweise für Meßzwecke, mit einem Bauelement (1, 30, 50, 60) mit einer Mehrzahl von Bohrungen, in denen mindestens ein anderes Teil befestigbar ist, dadurch gekennzeichnet, daß er mindestens ein Verbindungselement (20, 100, 110) mit einer zylindrischen oder prismatischen Außenfläche aufweist, das an mindestens einigen Punkten der Außenfläche elastisch federnd ausgebildet ist, derart, daß es in eine zylindrische Aussparung (12) des Bauelements unter elastischer Verformung seiner federnden Bereiche einsetzbar ist und in der Aussparung in einer Ebene rechtwinklig zu seiner Achse unter Verformung der federnden Bereiche verlagerbar ist, und daß das Verbindungselement ein Gewinde aufweist.

2. Bausatz nach Anspruch 1, dadurch gekennzeichnet, daß die elastischen Bereiche durch einen O-Ring (82) gebildet sind.

3. Bausatz nach Anspruch 1, dadurch gekennzeichnet, daß die elastischen Bereiche durch ein mit dem Verbindungselement verbundenes Kunststoffteil gebildet sind.

4. Bausatz nach Anspruch 3, dadurch gekennzeichnet, daß das Kunststoffteil das Verbindungselement topfartig umgibt.

5. Bausatz nach einem der Ansprüche 1 bis 4, dadurch gekennzeichnet, daß das Verbindungselement eine Mutter (20) ist, an deren Außenfläche die elastischen Bereiche vorgesehen sind.

6. Bausatz nach einem der Ansprüche 1 bis 4, dadurch gekennzeichnet, daß das Verbindungselement eine Hülse (100) ist, an deren Außenfläche die elastischen Bereiche vorgesehen sind und die ein Innengewinde aufweist.

7. Bausatz nach einem der vorhergehenden Ansprüche, dadurch gekennzeichnet, daß er ein weiteres Verbindungselement aufweist, das als Hülse (90) mit glatter Bohrung ausgebildet ist, wobei die Außenseite der Hülse die elastischen Bereiche aufweist.

8. Bausatz nach einem der Ansprüche 1 bis 4, dadurch gekennzeichnet, daß das Verbindungselement als Schraubenbolzen (110) ausgebildet ist, in dessen mittlerem Längenbereich eine Verdickung (112) vorgesehen ist, die die elastischen Bereiche aufweist.

9. Bausatz nach einem der Ansprüche 6 bis 8, dadurch gekennzeichnet, daß die elastischen Bereiche an der Außenfläche der Hülse bzw. der Verdickung mindestens zweimal in axialem Abstand voneinander vorgesehen sind.

10. Bauelement für einen Bausatz für Werkstückhalterungen vorzugsweise für Meßzwecke nach einem der vorhergehenden Ansprüche, das als planparalleles Element ausgebildet ist, das zwei parallele ebene Flächen und mindestens eine dazu rechtwinklig verlaufende Fläche aufweist, mit in mindestens einer der parallelen Flächen in einem vorgegebenen Raster angeordneten durchgehenden Bohrungen, dadurch gekennzeichnet, daß die Bohrungen (10) von den beiden parallelen Flächen durch je eine vorzugsweise im wesent lichen zylindrische konzentrische Einsenkung (12) abgesetzt sind.

11. Bauelement für einen Bausatz für Werkstückhalterungen vorzugsweise für Meßzwecke nach einem der Ansprüche 1 bis 9, das als planparalleles Element ausgebildet ist, das zwei parallele ebene Flächen und mindestens eine dazu rechtwinklig verlaufende Fläche aufweist, mit in mindestens einer der parallelen Flächen in einem vorgegebenen Raster angeordneten durchgehenden Bohrungen und Gewindebohrungen, dadurch gekennzeichnet, daß die Bohrungen (10) von den beiden parallelen Flächen durch je eine vorzugsweise im wesentlichen zylindrische konzentrische Einsenkung (12) abgesetzt sind, und daß die Gewindebohrung (86) in einem Metallteil vorgesehen ist, das unter Zwischenschaltung eines in Radialrichtung elastisch verformbaren Teils in eine Einsenkung in einer der parallelen Flächen eingesetzt ist.

12. Bauelement nach Anspruch 11, dadurch gekennzeichnet, daß das elastisch verformbare Teil mit dem Metallteil verbunden ist.

13. Bauelement nach Anspruch 11, dadurch gekennzeichnet, daß das elastisch verformbare Teil mit dem Bauelement verbunden ist.

14. Bauelement nach Anspruch 11, dadurch gekennzeichnet, daß das elastisch verformbare Teil mit dem Metallteil und dem Bauelement lösbar verbunden ist.

15. Bauelement nach einem der Ansprüche 10 bis 14, dadurch gekennzeichnet, daß das Bauelement in einer rechtwinklig zu den beiden Parallelflächen verlaufenden Fläche (6, 8) mindestens eine Gewindebohrung (14) aufweist, die von der genannten Fläche durch eine Einsenkung (12) abgesetzt ist, die die gleichen Abmessungen aufweist wie die Einsenkungen in den beiden parallelen Flächen (3.4), und daß der Außendurchmesser des Gewindeteils einer zu der Gewindebohrung passenden Schraube kleiner ist als der Durchmesser der Bohrungen in den beiden parallelen Flächen.

Fig.1

Fig. 2

Fig.3

Fig.4

Fig. 5

Fig.6

Fig.11

Fig.7

Fig.8

Fig.9

Fig.10